# FASCICULE DE BREVET EUROPEEN

(11) **EP 1 144 099 B1**
(45) Date de publication et mention de la délivrance du brevet: **19.03.2003**
(21) Numéro de dépôt: 99956132.7
(22) Date de dépôt: 24.11.1999
(51) Int. Cl.: B01D 71/02, B01D 53/22

(54) **MEMBRANE COMPRENANT UN SUPPORT POREUX ET UNE COUCHE D'UN TAMIS MOLECULAIRE ET SON PROCEDE DE PREPARATION**
MEMBRAN MIT EINEM PORÖSEN TRÄGER UND EINER SCHICHT AUS MOLEKULARSIEB, UND VERFAHREN ZUR HERSTELLUNG
MEMBRANE COMPRISING A POROUS SUPPORT AND A MOLECULAR SIEVE LAYER AND METHOD FOR PREPARING SAME

(30) Priorité: 04.12.1998 FR 9815375
(43) Date de publication de la demande: 17.10.2001
(73) Titulaire: Pall Corporation, East Hills, NY 11548-1289 (US)
(72) Inventeur: SORIA, Raymond, F-65460 Bazet (FR); CHANAUD, Philippe, F-65000 Tarbes (FR)
(74) Mandataire: Cabinet Hirsch
(86) Numéro de dépôt international: FR9902891
(87) Numéro de publication internationale: WO00033948

(56) Documents cités:
- EP-A- 0 674 939
- EP-A- 0 778 076
- WO-A-93/17781
- WO-A-95/29751
- WO-A-96/01685
- PATENT ABSTRACTS OF JAPAN vol. 011, no. 369 (C-461), 2 décembre 1987 (1987-12-02) & JP 62 140620 A (TORAY IND INC), 24 juin 1987 (1987-06-24) & DATABASE WPI Section Ch, Week 8731 Derwent Publications Ltd., London, GB; Class A32, AN 87-216140 & JP 62 140620 A (TORAY IND INC)

## Description

La présente invention a pour objet un nouveau procédé de préparation de membrane comprenant un support poreux et une couche d'un tamis moléculaire, ainsi que de nouvelles membranes. L'invention s'applique à la filtration ou la séparation de fluides gazeux ou liquides, la pervaporation, l'osmose inverse ou la catalyse.

On connaît déjà des membranes zéolithiques constitués d'une partie (macro)poreuse et d'une zéolithe. Ces matériaux peuvent être obtenus principalement par deux procédés, un procédé faisant emploi d'un gel et un procédé faisant emploi d'une solution (colloïdale ou oligomérique), ces procédés comportant plusieurs étapes. Dans un premier temps on forme un film (procédé gel) ou une imprégnation totale (procédé solution), ces film ou imprégnation totale contenant des espèces susceptibles de former une zéolithe, dans un deuxième temps on cristallise la zéolithe en conditions hydrothermales.

Ces deux types de procédés souffrent d'inconvénients majeurs.

Dans les deux cas le pH de départ au cours de la première étape est extrêmement élevé. Ce pH fortement basique n'est pas compatible avec certains matériaux céramiques. En effet l'alumine gamma couramment utilisée comme couche support pour la zéolithe est soluble dans les milieux fortement basiques, ce qui conduit à la solubilisation d'alumine dans le précurseur de la zéolithe, conduisant donc à une contamination chimique de la zéolithe, l'alumine s'intercalant dans la structure cristalline recherchée.

Dans les deux cas, l'utilisation de grands volumes de gel ou de solution précurseur de zéolithe et le faible rendement de synthèse rendent ce procédé coûteux, surtout lorsque des agents structurants du type ammonium quaternaire sont utilisés (et cela d'autant plus que plusieurs cycles de synthèse sont souvent nécessaires).

Dans le cas du procédé gel l'homogénéité de la composition du gel est difficile à assurer, puisque le gel est formé à partir de différents constituants qui ne se mélangent pas de façon homogène. La composition locale du gel variant, les caractéristiques de la structure de zéolithe varient et les performances de la membrane sont modifiées. Ce défaut est d'ailleurs clairement reconnu dans la demande EP-A-0481660, qui indique que des défauts ponctuels sont présents. Ainsi EP-A-0778076 propose la fabrication du gel in situ; la porosité du support est remplie par une première solution, on met alors ce support en contact avec une deuxième solution non miscible avec la première. Il y a gélification au contact des deux solutions et de manière locale, le gel étant formé essentiellement à la surface du support poreux. La gélification modifie les compositions des solutions, par conséquent il n'est pas possible d'assurer un gel identique en tout point du support poreux.

Dans l'article "Characterization and Permeation Properties of ZSM-5 Tubular Membranes", AIChE Journal, July 1997, Vol.43, N°7, Coronas et al ont étudié l'influence du support sur le dépôt de couches zéolithiques. Deux membranes asymétriques ont été testées, l'une avec une couche d'alumine-γ de diamètre de pores de 5 nm et l'autre avec une couche d'alumine-α de diamètre de pores 0,2 µm. Le procédé utilisé par Coronas et al est un procédé gel. Coronas et al concluent qu'il est plus facile de former une couche zéolithique continue sur un support de type alumine-γ (5 nm) que sur un support de type alumine-α (0,2 µm), qui dans ce dernier cas nécessite de répéter le procédé.

Des cycles dépôt-cristallisation supplémentaires sont en fait toujours nécessaires dans le cas des procédés gel pour améliorer la qualité de la membrane et obtenir ainsi un produit permettant effectivement une séparation. La couche de zéolithe obtenue par les procédés gel est donc en fait une multicouches.

D'autre part, en raison de leur viscosité élevée les gels obtureront des canaux de diamètres pouvant atteindre quelques millimètres. Cette technique est donc réservée aux structures planes ou aux tubes de fort diamètre intérieur. Ainsi, la totalité des exemples de EP-A-0778076 utilisent des supports à surface plane, ainsi que la majorité des exemples de la demande EP-A-0481660, l'exemple 12 de cette demande mettant en oeuvre des tubes dont le diamètre interne est d'environ 6,5 mm. Or, l'utilisation de support céramique de géométrie tubulaire (quelle soit mono- ou multicanal) dont les canaux ont des diamètres importants, ou de géométrie plane, ne permet pas d'obtenir des modules de filtration ou de séparation de gaz présentant une forte compacité c'est à dire développant une surface filtrante importante par rapport au volume occupé. En effet, on admet que la compacité pour des modules à membranes planes est de l'ordre de 150 m²/m³, celle de modules à membranes multicanal n'atteignant que 300 m²/m³; ces compacités sont très faibles en regard de celles requises pour des applications de séparation de gaz.

Dans le cas de procédés faisant emploi de solution, comme dans la demande de brevet WO-A-9529751, il est aussi indiqué que la nucléation de la zéolithe, préalable nécessaire à sa formation, ne peut pas se faire pour des volumes dont la dimension caractéristique est supérieure à environ 10 microns et/ou inférieure à 5 nm. Selon ce document, il est donc impossible d'obtenir une nucléation et une croissance hors d'un matériau poreux spécifique. Ceci interdit donc la formation de couches, que ce soit à l'intérieur ou à l'extérieur du tube, ainsi que pour des tubes en un support macroporeux dont le diamètre de pore moyen est supérieur par exemple à 10 microns.

De plus, le procédé solution selon le brevet WO-A-9529751 implique une imprégnation dans la totalité du volume poreux, (présentant la dimension appropriée), donc la zéolithe occupe l'intégralité du support et n'est pas localisée précisément (par exemple sous forme d'une couche). Ce manque de localisation est dommageable pour l'efficacité du matériau composite lors de son utilisation; il est parfaitement connu que la perméabilité d'un gaz au travers d'une membrane zéolithique est liée à l'épaisseur de la zéolithe : plus la zéolithe est épaisse, plus la perméabilité diminue pour une efficacité de séparation qui n'est pas affectée.

La solution fournit dans EP-A-0674939 est similaire à celle fournit dans WO-A-9529751.

Ainsi, la formation à l'aide d'un procédé gel, d'une couche zéolithique sur un support (par exemple de diamètre de pore d'environ 0,2 µm) nécessite de répéter le procédé gel. Un procédé solution, selon le brevet WO-A-9529751, ne produit pas de couche zéolithique sur le support mais dans celui-ci, à l'exclusion de couche sur celui-ci, et ne permet pas la formation de couche, dans ou sur le support, pour des diamètres de pore supérieurs à 10 microns.

On recherche donc des matériaux présentant une couche de zéolithe, notamment au niveau des canaux intérieurs d'un support multicanal, cette couche devant être homogène tant du point de vue chimique que du point de vue physique, sous forme d'une couche unitaire exempte de défaut, le procédé de préparation devant en outre être simple et économique.

Aucun des documents cités ci-dessus n'offre de solution, ni n'enseigne ou suggère la présente invention.

Le document WO-A-9601685 décrit un procédé de formation d'une couche d'un tamis moléculaire sur un substrat poreux avec synthèse hydrothermale.

La présente invention propose une solution pour remédier à ces inconvénients.

Selon un premier aspect, l'invention offre de nouveaux produits ainsi qu'un nouveau procédé de fabrication.

Ainsi l'invention fournit une membrane comprenant un support poreux homogène ayant un diamètre de pore compris entre 5 nm et 20 µm, sur lequel est déposée une couche d'un tamis moléculaire unitaire zéro-défaut ne présentant pas de rupture de sa structure tri-dimensionnelle macroscopique,
susceptible d'être obtenue par le procédé comprenant les étapes suivantes:
(i) préparation d'une solution inerte et d'une solution précurseur du tamis moléculaire;
(ii) imprégnation de la porosité du support avec la solution inerte et/ou la solution précurseur;
(iii) mise en contact d'une zone du support céramique qui est destinée à recevoir la couche d'un tamis moléculaire avec la solution précurseur, et la mise en contact d'une zone du support qui est destinée à ne pas recevoir la couche d'un tamis moléculaire avec la solution inerte; et
(iv) formation in situ du tamis moléculaire.

Selon un mode de réalisation, la couche unitaire est une couche unique.

Selon un mode de réalisation, l'épaisseur de la couche d'un tamis moléculaire est comprise entre 1 et 100 µm, par exemple entre 3 et 50 µm.

Selon un mode de réalisation, le tamis moléculaire est une zéolithe.

Selon un mode de réalisation, le support présente un diamètre de pore compris entre 5 nm et 10 µm, par exemple entre 50 nm et 2 µm.

Selon un mode de réalisation, le support est un support céramique.

Selon un mode de réalisation, le support est une fibre, par exemple une fibre muiti-canal; la couche de tamis moléculaire peut être disposée sur l'extérieur de la fibre ou la couche de tamis moléculaire peut être disposée à l'intérieur du (des) canal (aux) de la fibre ou la couche de tamis moléculaire peut être disposée sur l'extérieur de la fibre, le tamis moléculaire étant par ailleurs présent dans l'épaisseur de la fibre ou la couche de tamis moléculaire peut être disposée à l'intérieur du (des) canal(aux) de la fibre, le tamis moléculaire étant par ailleurs présent dans l'épaisseur de la fibre.

L'invention fournit aussi un module comprenant des membranes selon l'invention.

L'invention fournit aussi l'utilisation du module selon l'invention pour la séparation de gaz.
L'invention fournir, aussi un procédé de séparation de gaz comprenant l'étape de perméation sur une membrane selon l'invention.

Ainsi, l'invention fournit un procédé de préparation desdites membranes ainsi que des membranes selon l'invention comprenant les étapes suivantes:
(i) préparation d'une solution inerte et d'une solution précurseur du tamis moléculaire;
(ii) imprégnation de la porosité du support avec la solution inerte et/ou la solution précurseur;
(iii) mise en contact d'une zone du support céramique qui est destinée à recevoir la couche d'un tamis moléculaire avec la solution précurseur, et la mise en contact d'une zone du support qui est destinée à ne pas recevoir la couche d'un tamis moléculaire avec la solution inerte; et
(iv) formation in situ du tamis moléculaire.

Selon un mode de réalisation, le support est un support comprenant au moins un canal.

Selon un mode de réalisation, les étapes (ii) et (iii) comprennent:
d'une part le remplissage du volume du(des) canal(aux) et des pores du support avec la solution inerte et d'autre part le remplissage d'un volume englobant l'extérieur du support avec la solution précurseur.

Selon un mode de réalisation, les étapes (ii) et (iii) comprennent:
d'une part le remplissage d'un volume englobant l'extérieur du support et des pores du support avec la solution inerte et d'autre part le remplissage du volume du(des) canal(aux) avec la solution précurseur.

Selon un mode de réalisation, les étapes (ii) et (iii) comprennent:
d'une part le remplissage du volume du(des) canal(aux) avec la solution inerte et d'autre part le remplissage d'un volume englobant l'extérieur du support et les pores du support avec la solution précurseur.

Selon un mode de réalisation, les étapes (ii) et (iii) comprennent:
d'une part le remplissage d'un volume englobant l'extérieur du support avec la solution inerte et d'autre part le remplissage du volume du(des) canal(aux) et des pores du support avec la solution précurseur.

Selon un mode de réalisation, la solution précurseur est une solution aqueuse comprenant un agent précurseur du tamis moléculaire et un agent structurant.

Selon un mode de réalisation, la solution précurseur est vieillie préalablement à son utilisation d'une durée comprise entre 1 et 96 heures, par exemple comprise entre 12 et 72 heures.

Selon un mode de réalisation, la solution inerte est une solution aqueuse.

Selon un mode de réalisation, l'étape (iv) de formation du tamis moléculaire comprend une synthèse hydrothermale suivie d'une calcination.

Le procédé est approprié pour la préparation des membranes selon l'invention, mais pourrait aussi, le cas échéant, s'appliquer aux membranes de l'art antérieur, en partant des produits de départ appropriés.

L'invention est maintenant décrite plus en détails dans la description qui suit.

### Support poreux

Le support poreux pour la préparation des membranes est homogène; il se distingue des membranes asymétriques utilisées jusqu'alors dans l'art antérieur. L'homogénéité doit cependant s'apprécier localement, en ce sens que grâce au procédé selon l'invention, on peut localiser la formation de zéolithe. Ainsi, l'homogénéité s'apprécie au niveau de la zone en contact (imprégnée) avec la solution précurseur.

Le support peut être en métal, en verre, en céramique (par ex alumine-α, alumine-γ, oxyde de titane, oxyde de zirconium) etc.

Dans ce qui suit, la description est donnée en référence à une " fibre " en tant que support poreux; tout autre type de support, notamment plan, appartient à l'invention.

La fibre est avantageusement une fibre céramique poreuse multicanal; elle peut cependant être monocanal.

Cette fibre correspond à un barreau de céramique poreuse qui est percé de un ou plusieurs' canaux, ledit barreau en céramique poreuse présentant une structure poreuse (au sens classique du terme) et une porosité variable, et l'axe desdits canaux est parallèle à l'axe du barreau céramique.

Selon un mode de réalisation, les canaux sont distribués au sommet d'un polygone régulier dont l'ordre est compris entre 3 et 6; un canal supplémentaire pouvant occuper le centre dudit polygone dans le cas où l'ordre est supérieur à 3; de préférence l'ordre est 5 ou 6.

La fibre et/ou les canaux ont toutes formes appropriées, par exemple de section droite circulaire; des sections pour les canaux en forme de quartier d'orange sont possibles, de même que pour la fibre, une géométrie circulaire pourra être remplacée par une géométrie multilobale. Dans le cas de la géométrie à quartiers d'orange (ou dans le cas d'un canal qui ne serait pas circulaire), le diamètre d'un tel canal sera défini comme le diamètre d'un canal circulaire ayant la même section droite. Dans le cas où la fibre n'aurait pas une section circulaire, on définira de façon similaire le diamètre d'une telle fibre comme le diamètre d'une fibre circulaire ayant la même section droite.

La fibre et/ou les canaux sont de préférence de section droite circulaire.

De préférence encore, tous les canaux sont sensiblement identiques; on limitera ainsi au mieux les différences de perte de charge et de débit d'un canal à l'autre le long de la fibre.

Selon un mode de réalisation, la fibre (multicanal ou monocanal) selon l'invention présente les caractéristiques suivantes:
(i) le diamètre de chaque canal est compris entre 150 et 2000 µm, de préférence entre 300 et 1000 µm, et/ou
(ii) le rapport d'enveloppe Re correspondant au ratio du diamètre de la fibre céramique poreuse sur le diamètre du canal est tel que Re est compris entre 2,5 et 15, de préférence entre 4 et 10, et/ou
(iii) le rapport d'occupation Ro correspondant au ratio de la somme des sections droites des canaux sur la section droite de la fibre céramique poreuse est tel que Ro est compris entre 0,03 et 0,45, de préférence entre 0,04 et 0,35, et avantageusement entre 0,15 et 0,35, et/ou
(iv) le rapport de soutien Rs correspondant au rapport entre l'épaisseur moyenne de paroi mesurée selon le rayon de la fibre sur le diamètre du canal traversé, ladite épaisseur moyenne correspondant à la moyenne de l'épaisseur des parois des canaux sis sur le rayon de la fibre passant par le nombre maximum de canaux, est tel que Rs est compris entre 0,3 et 2,5, de préférence entre 0,5 et 1,5, et/ou
(v) le rapport d'épaisseur Rp correspondant au rapport des épaisseurs des parois des canaux sis sur le rayon de la fibre passant par le nombre maximum de canaux, est tel que Rp est compris entre 1/3 et 3, de préférence entre 1/2 et 2, avantageusement ce rapport est d'environ 1.

Le diamètre de la fibre peut aller par exemple jusqu'à 25 mm, typiquement, il sera compris entre 2 et 10 mm, de préférence entre 3 et 7 mm.

La fibre présente un diamètre de pore moyen compris entre 5 nm et 20 µm, de préférence entre 5 nm et 10 µm, de préférence entre 50 nm et 2 µm. Selon une variante, le matériau de la fibre est un matériau céramique poreux massif homogène dont le diamètre moyen des pores D50 est inférieur à 4 µm et dont la porosité fermée est inférieure à 2%. D50 est le diamètre moyen en volume tel que 50% des pores ont un diamètre inférieur à D50.

Selon une variante, le matériau présente une distribution volumique de diamètre de pores monodisperse; selon cette variante l'écart-type est inférieur à 35%, de préférence à 25% du diamètre moyen en volume D50. Typiquement, selon cette variante, le matériau présentera un écart-type compris entre 10 et 25% du diamètre moyen en volume D50.

La fibre présente une porosité moyenne comprise par exemple entre 10 et 70%, de préférence entre 35 et 60%.

La fibre peut être telle que le diamètre moyen de pore est compris entre 0,5 et 2 µm et la porosité ouverte est comprise entre 45 et 60%.

Les fibres présentent une longueur qui peut atteindre plusieurs mètres; classiquement la longueur d'une fibre est comprise entre 0,5 et 2 m.

Les fibres présentent en général une flèche (la déformation due au frittage) faible, par exemple inférieure à 0,3 %, de préférence inférieure à 0,15 %, plus avantageusement inférieure à 0,05 %. Une flèche faible favorisera le montage des fibres en module.

La fibre est classiquement en une céramique, avantageusement, un oxyde métallique.

Le procédé de préparation des fibres comprend trois étapes principales :
(i) La préparation d'une pâte minérale constituée d'une partie ou charge minérale, d'un liant et d'un solvant, avec éventuellement un agent porogène, un défloculant et/ou un agent d'extrusion;
(ii) La mise en forme par extrusion de ladite pâte;
(iii) La consolidation de cette forme par frittage.

La partie minérale de ladite pâte est constituée de particules d'un composé métallique qui formera après frittage le réseau poreux (homogène dans son volume). Le composé métallique est soit un composé non-oxyde, soit un oxyde métallique. Dans le cas où il s'agit d'un dérivé non-oxyde on choisira un dérivé du silicium ou de l'aluminium et préférentiellement le carbure de silicium, le nitrure de silicium ou le nitrure d'aluminium. Dans le cas où le composé métallique est un oxyde on choisira parmi les oxydes d'aluminium, de silicium ou des métaux des groupes IVA (groupe du titane) ou VA (groupe du vanadium) et de préférence l'alumine, l'oxyde de zirconium ou l'oxyde de titane. Ces oxydes peuvent être utilisés seul ou en mélange. Le composé métallique présente par exemple un diamètre moyen de particule (mesuré au sédigraphe) entre 0.15 et 2 µm, et préférentiellement entre 0,15 et 0,6 µm. Sa teneur dans la pâte sera comprise entre 50 et 90 % massique, et de préférence entre 65 et 85 % massique. Cette charge minérale pourra être avantageusement constituée de particules dont les diamètres d90 et d50 sont tels que d90/d50 < 3 et avantageusement d90/d50 < 2.

Le liant organique conférera à la pâte les propriétés rhéologiques nécessaires à l'extrusion et les propriétés mécaniques nécessaires pour obtenir une bonne cohésion du produit après l'extrusion. Ledit liant organique est de préférence, mais pas obligatoirement, un polymère hydrosoluble. Le polymère présentera par exemple, pour une solution à 2% massique, une viscosité mesurée à 20°C comprise entre 4 et 10Pa/s. Ce polymère peut être choisi parmi les celluloses et leurs dérivés (HEC, CMC, HPC, HPMC, etc.), ou peut aussi un acide polyacrylique, du polyéthylèneglycol, un alcool polyvinylique, etc.. On peut aussi utiliser en tant que liant un liant classiquement utilisé comme liant de compression (ou pressage), plutôt qu'un liant de filage, les termes "liant de compression (ou pressage)" et "liant de filage" ayant le sens classique connu de l'homme de l'art. Un liant préféré est cristallin, notamment une cellulose microcristalline, qui correspondra à tout ou partie du liant. La pâte contiendra par exemple entre 2 et 10 % massique de liant organique et préférentiellement entre 3 et 8 % massique.

Le solvant a pour rôle de disperser la partie minérale et le liant. Dans le cas où l'on utilise un polymère hydrosoluble, on choisira l'eau comme solvant; dans le cas ou le polymère n'est pas hydrosoluble on choisira un alcool par exemple l'éthanol comme solvant. La concentration du solvant sera comprise par exemple entre 8 et 40% massique et préférentiellement entre 10 et 27% massique.

L'agent créateur de porosité ou porogène se caractérise par une température de décomposition faible, par exemple inférieure à 450°C, de préférence inférieure à 250°C. Il se caractérise d'autre part par la taille moyenne des particules qui le composent, taille qui est en rapport avec celle des particules de la charge métallique. Cette taille est comprise par exemple entre 5 et 30 µm et de préférence entre 8 et 16 µm. Le porogène est sensiblement insoluble dans le solvant choisi. On peut utiliser un porogène d'origine naturelle et, par exemple, de la sciure de coque de noyaux, de la farine ou des carbon black, ou d'origine artificielle et par exemple des billes de polyéthylène basse densité, ou une émulsion eau/huile et par exemple du mobilcer (émulsion huile-dans-eau).

Les tailles des particules de charge minérale et des particules d'agent porogène peuvent varier indépendamment les unes des autres dans une très grande mesure.

Un défloculant soluble dans le solvant améliorera la dispersion des particules du composé métallique. On choisira par exemple un acide polyacrylique, un acide phospho-organique ou un alkyl-sulfonique. La teneur en défloculant est de l'ordre de 0,5 à 1 % massique.

Dans certains cas, on ajoutera un agent de processabilité en général un agent d'aide à l'extrusion tel qu'un polyéthylèneglycol. La teneur en agent d'extrusion est de l'ordre de 0.5 à 1 % massique.

Ces composants sont mélangés pour former une pâte de filabilité comprise en général entre 9 et 30 bar, et de préférence entre 10 et 16 bar.

La résistance mécanique à la flexion peut être modifiée de façon classique par l'introduction dans la composition de la pâte de liants minéraux qui réagiront au cours du frittage pour augmenter les forces de cohésion entre les particules.

La mise en forme est réalisée classiquement par extrusion. A l'aide d'une vis ou d'un piston, la pâte est poussée au travers d'une filière complexe afin de prendre sa géométrie. Les membranes sont recueillies au sortir de la filière, séchées à l'air libre afin d'éliminer l'eau ou le solvant, puis frittées à une température comprise entre 1300 et 1700°C pendant par exemple deux heures. Ce frittage se fait sous une atmosphère normale ou neutre (par exemple d'argon) dans le cas de pâte à base d'oxyde métallique, et sous atmosphère neutre (par exemple d'argon ou d'hélium) dans le cas où le composé métallique est un non-oxyde.

Le dispositif d'extrusion est un dispositif classique, à savoir il comprend une filière, avec disposée au centre de celle-ci une couronne supportant les pions qui formeront les canaux.

Les ébauches de fibres obtenues à la sortie du dispositif d'extrusion peuvent être séchées et/ou frittées dans des barillets tournants, par exemple selon la technique décrite dans le brevet FR-A-2229313 au nom de Ceraver.

### Tamis moléculaire

Le tamis moléculaire selon l'invention est classique et est notamment une structure cristalline du type zéolithe. Une zéolithe est par exemple un solide cristallin ayant une structure tridimensionnelle microscopique résultant de l'enchaînement de tétraèdres TO4 (T étant par exemple choisi parmi Si, Al, B, Ga, Ge et P), chaque atome d'oxygène étant commun à deux tétraèdres, conduisant à un réseau de canaux de dimension moléculaire (le diamètre de pores varie par ex. de 3 à 10Ȧ). Des types structuraux sont par exemple FAU, GME, MOR, OFF, MFI, MEL, FER, LTA, TON et CHA, selon la nomenclature IUPAC. Le tamis moléculaire peut aussi être un oxyde du type métallosilicate, dont une partie des éléments T précités sont remplacés par exemple par titane (par exemple titanosilicate, tel que TS-1), manganèse, molybdène, gallium (par exemple une GAPO (gallophosphates)), bore, zinc, fer et tungstène. Le tamis moléculaire peut aussi être une terre de diatomées, un aluminophosphate cristallin (ALPO) ou un silicoaluminophosphate cristallin (SAPO). Un exemple particulier de tamis moléculaire est la zéolithe ZSM (en (particulier ZSM-5) ou la silicalite. La description qui suit est donnée en référence à une zéolithe (en particulier la silicalite), mais peut être étendue à tout tamis moléculaire auquel s'applique l'invention.

L'épaisseur de la couche est comprise par exemple entre 1 et 100 µm, de préférence entre 3 et 50 µm, pour la partie qui est située sur l'extérieur du support. Une partie est en général infiltrée dans le support, selon une épaisseur comprise par exemple entre 0,2 et 10 µm, de préférence entre 0,5 et 5 µm.

Cette couche de zéolithe présente des particularités, notamment d'homogénéité, en ce sens que la composition de la couche déposée n'est pas modifiée par un phénomène parasite tel que gélification ou dissolution d'une partie de la membrane. Ces caractéristiques de la couche de zéolithe sont les suivantes. La couche de zéolithe est, dans l'invention, obtenue de préférence en une seule étape "dépôt-cristallisation". On obtient ainsi une couche unique. On peut cependant aussi procéder en plusieurs étapes; mais à chaque étape est déposée une couche "unitaire", présentant la caractéristique ci-après. Chaque couche "unitaire" (ou couche unique le cas échéant) est dite "zéro-défaut", en ce sens qu'il n'y a pas de rupture de la structure tri-dimensionnelle macroscopique. (Le terme "structure tri-dimensionnelle macroscopique" est utilisé par contraste avec le terme "structure tri-dimensionnelle microscopique" qui désigne le niveau moléculaire). Ceci est mis en évidence par lé test consistant à perméer (ou tenter de) un gaz dont la dimension correspond à la dimension caractéristique du tamis moléculaire (cette dimension étant le cas échéant pondérée compte tenu de la dimension qu support, notamment pour des supports dont le diamètre de pore est élevé, par exemple supérieur à 10 microns). Dans le cas présent (dans le cas de support ayant une dimension de pore par exemple inférieure à 10 microns) pour de la silicalite le gaz test est le SF₆ ; la présente couche unitaire est étanche à ce gaz. Par contre, le gaz azote traverse la couche. Dans le cas d'un support dont le taille est de 12 microns, il y a toujours formation d'un réseau cristallin se formant sur le support "sans rupture", à savoir la couche est homogène et ne présente pas de défaut; l'étanchèité au SF₆ étant obtenue dans ce cas avec deux passes.

L'épaisseur de la couche zéolithique unitaire est, en général, constante à plus ou moins 20%, de préférence 10%, sur le support.

### Membrane et module selon l'invention.

La membrane se caractérise par une couche zéolithique, présente par exemple sur la surface intérieure des canaux de la fibre, une partie (faible) de cette couche étant infiltrée dans le support poreux. Cette couche peut aussi se situer sur l'extérieur de la fibre.

L'invention permet d'obtenir une localisation de la zéolithe par rapport à la géométrie de la fibre, à savoir sous forme d'une couche unitaire et non plus dans l'épaisseur de la fibre, cette couche unitaire étant "zéro-défaut".

La membrane se caractérise aussi par les caractéristiques de la couche zéolithique déposée, ces caractéristiques étant indiquées ci-avant.

L'un des avantages de l'invention est de permettre d'obtenir des modules à forte compacité en utilisant des membranes comprenant des (micro)fibres poreuses céramiques avec une couche zéolithique.

Un autre avantage de l'invention réside dans les performances élevées de séparation et de perméabilité de la membrane. En effet, la présente membrane offre une perméabilité élevée du fait des caractéristiques du support et de la faible épaisseur de la couche zéolithique et une séparation efficace du fait d'une couche "zéro-défaut".

La membrane selon l'invention a des applications dans les domaines de la filtration ou la séparation de fluides gazeux ou liquides, la pervaporation, l'osmose inverse ou la catalyse.

A titre d'exemple de gaz pouvant être séparés, on peut citer: n- et iso-hydrocarbures en C₄-C₈; xylènes; CH₄/N₂; et CH₄/CO₂.

Dans le cas de la séparation de gaz, le mode de réalisation suivant est approprié. Dans celui-ci, la zéolithe est à la surface extérieure de la fibre (de préférence monocanal). Le gaz à séparer doit donc perméer de l'extérieur vers l'intérieur de la fibre; le gaz est injecté par le côté de la cartouche. Ceci permet une étanchéité au niveau du potting d'extrémité: comme le potting est en contact avec la surface extérieure de la fibre portant la zéolithe, aucun gaz ne peut perméer dans l'épaisseur du support qui sinon serait libre au niveau du potting. De plus, avoir la zéolithe sur la surface extérieure permet des pressions plus élevées (jusqu'à 100 bar), puisque la fibre présente une bonne résistance à la compression. Des pressions plus élevées signifient des débits plus élevés et des rendements améliorés.

### Procédé de préparation.

La présente invention concerne un procédé de préparation de membrane comprenant un support céramique poreux et une couche d'un tamis moléculaire, comprenant les étapes (i) de préparation d'une solution inerte et d'une solution précurseur; (ii) d'imprégnation de la porosité du support avec la solution inerte; (iii) de mise en contact de la zone du support céramique destinée à recevoir la couche d'un tamis moléculaire avec la solution précurseur, et mise en contact de la zone du support céramique destinée à ne pas recevoir la couche d'un tamis moléculaire avec la solution inerte; et (iv) de formation in situ du tamis moléculaire.

Dans un premier temps, on prépare la solution précurseur contenant les espèces précurseurs de zéolithe et l'agent structurant, ces espèces et agent étant déterminés en fonction de la zéolithe finale recherchée. Dans le cas d'un zéolithe à base de silicium, i.e. une silicalite, cette solution contient du silicium sous forme de silice micronisée ou d'alkoxyde de silicium et éventuellement des espèces métalliques complémentaires sous forme de sel ou d'alkoxyde. De plus cette solution contient une base organique tel qu'un hydroxyde d'ammonium quaternaire et en particulier l'hydroxyde de tétrapropyl ammonium, de tétraméthyl ou de tétrabutyl, ou un mélange d'une base minérale tel que la soude et d'un halogénure de tétraalkyl ammonium tel que le bromure de tétrapropyl ammonium. La solution obtenue est en général laissée vieillir pour une durée comprise par exemple entre 1 et 96 heures, et préférentiellement comprise entre 12 et 72 heures, afin de conduire à la solution précurseur recherchée. La solution précurseur peut notamment être celle décrite dans la demande WO-A-9529751. Cette solution est indiquée comme étant une solution oligomérique, les éléments précurseurs étant de petite taille, par exemple de l'ordre du nanomètre. Cette solution, de préférence, de contient pas de base forte.

En parallèle, on prépare une solution inerte; cette solution est en général de l'eau (distillée).

Au cours des étapes (ii) et (iii) on met en contact la solution précurseur et le support de manière à constituer un volume solution qui donnera de la zéolithe. Pour cela la fibre est introduite dans un doigt de gant (par exemple en PTFE) placé dans un autoclave.

Selon une première variante, on procède à l'imprégnation de la porosité du support avec la solution inerte; puis en fonction de la structure désirée de la membrane zéolithique (c'est à dire de la position du tamis moléculaire par rapport à la géométrie de la fibre) on réalisera la synthèse hydrothermale suivant l'une ou l'autre des variantes décrites ci dessous:
- Si la couche zéolithique est située sur l'extérieur de la fibre, la variante comprend d'une part le remplissage du volume du(des) canal(aux) avec la solution inerte et d'autre part le remplissage d'un volume englobant l'extérieur du support avec la solution précurseur, ce dernier volume étant le volume libre du doigt de gant.
- Si la couche zéolithique est située sur l'intérieur des canaux de la fibre, la variante comprend d'une part le remplissage d'un volume englobant l'extérieur du support avec la solution inerte, ce dernier volume étant le volume libre du doigt de gant, et d'autre part le remplissage du volume du(des) canal(aux) avec'la solution précurseur.

Selon une seconde variante, on procède à l'imprégnation de la porosité du support avec la solution précurseur; puis en fonction de la structure désirée de la membrane zéolithique (c'est à dire de la position du tamis moléculaire par rapport à la géométrie de la fibre) on réalisera la synthèse hydrothermale suivant l'une ou l'autre des variantes décrites ci dessous:
- Si la couche zéolithique est située dans et sur l'extérieur de la fibre, la variante comprend d'une part le remplissage du volume du(des) canal(aux) avec la solution inerte et d'autre part le remplissage d'un volume englobant l'extérieur du support avec la solution précurseur, ce dernier volume étant le volume libre du doigt de gant.
- Si la couche zéolithique est située dans et sur l'intérieur des canaux de la fibre, la variante comprend d'une part le remplissage d'un volume englobant l'extérieur du support avec la solution inerte, ce dernier volume étant le volume libre du doigt de gant, et d'autre part le remplissage du volume du(des) canal(aux) avec la solution précurseur.

Dans ce qui précède, les étapes d'imprégnation avec les diverses solutions peuvent être concomittantes ou séquentielles (pour une même solution). Par exemple, dans le premier cas de la première variante, on peut imprégner la porosité du support et remplir les canaux avec la solution inerte en même temps ou séquentiellement.

L'imprégnation de la porosité avec la solution précurseur peut n'être que partielle, si on le souhaite. Le tamis moléculaire ne sera alors présent que dans la zone imprégnée. En fonction de la "profondeur" d'imprégnation (imprégnation totale ou partielle) ou du défaut d'imprégnation, de la porosité du support avec la solution précurseur, on peut ajuster précisément la localisation du tamis moléculaire.

L'étape (iv) de formation du tamis moléculaire comprend généralement une synthèse hydrothermale suivie d'une calcination.
- La synthèse hydrothermale se fait en général à une température comprise entre 150 et 250°C, pour une durée de 12 à 96 heures. Les conditions préférentielles sont une température comprise entre 170 et 220°C et une durée comprise entre 48 et 84 heures.
- Après rinçage, en général à l'eau, la membrane est calcinée pour éliminer l'agent structurant résiduel. Cette calcination se fait en général à une température comprise entre 300 et 900°C et une durée de 2 à 5 heures, de manière préférentielle les conditions de calcination sont une température de 400 à 600°C, notamment 500°C, et une durée d'environ 3 heures. Cette calcination peut être oxydante ou non.

Les conditions décrites dans la demande WO-A-9529751 sont de la même façon appropriées.

Le présent procédé permet la réalisation d'une membrane céramique présentant de bonne propriété de séparation de gaz en un seul cycle de dépôt-cristallisation.

Le présent procédé offre encore l'avantage de contrôler d'une part les propriétés intrinsèques de la zéolithe telle que taille des canaux, acidité, hydrophobicité et d'autre part les propriétés du matériau composite telles que localisation de la zéolithe à une zone particulière de la géométrie de la fibre, caractéristique du dépôt de zéolithe.

Un autre avantage du présent procédé est un coût de fabrication réduit et cela grâce d'une part à l'utilisation d'un support poreux de faible coût et d'autre part grâce à une limitation des volumes de solutions utilisées et à un meilleur rendement en dépôt de zéolithe. En effet le confinement des réactifs dans les différents compartiments permet de réduire les volumes de solution et donc le coût de fabrication des membranes (la solution précurseur comprenant des réactifs coûteux, notamment par exemple la solution d'hydroxyde de tétrapropyl ammonium). De plus, le confinement des solutions provoque une augmentation du rendement de dépôt de cristaux, c'est-à-dire du rapport entre la masse de tamis moléculaire déposée sur la fibre support (et dans une moindre mesure dans la fibre poreuse support) et la masse de tamis moléculaire pouvant être produite à partir du volume de solution.

Le procédé selon l'invention s'applique à la préparation de membranes selon l'invention, mais aussi à tout type de membrane. Notamment, le procédé selon l'invention s'applique aux supports asymétriques.

Les exemples suivants illustrent l'invention sans la limiter.

Dans les exemples qui suivent, on utilise une fibre monocanal obtenue comme suit:

On prépare une pâte constituée d'alumine (taille moyenne des particules 3 µm), de microcellulose, d'éthylcellulose, de particules de polyéthylène basse densité (taille moyenne des particules 15 µm) et d'eau, selon une composition, en % en poids:

| | |
|---|---|
| alumine | 69.7 |
| microcellulose | 3.5 |
| éthylcellulose | 0.3 |
| polyéthylène basse densité | 7 |
| eau | 19.5 |

La pâte ainsi obtenue présente une filabilité de 15. Elle est extrudée au travers d'une filière pour fibre creuse de façon à former un tube de 1.5 mm de diamètre extérieur et de 0.8 mm de diamètre intérieur. La fibre ainsi obtenue est cuite à 1550°C en atmosphère normale.

### Exemple 1

On prépare une solution aqueuse en mélangeant 60 g de silice du type Aerosil 380 de DEGUSSA avec 1000 ml d'une solution molaire d'hydroxyde de tétrapropyl ammonium (TPAOH). On laisse la solution vieillir une nuit. On imprègne la porosité de la fibre avec de l'eau distillée. On remplit le canal avec la solution de silice. La fibre est alors placée dans un doigt de gant en PTFE de diamètre 1 cm remplie d'eau distillée, l'ensemble étant placé dans un autoclave; la synthèse hydrothermale est faite à 180°C pendant 3 jours. La fibre est ensuite rincée puis calcinée à 500°C pendant 5 heures.

La masse de zéolithe déposée est de 20 mg soit un rendement de 80 % par rapport à la masse de silice. L'observation par microscopie montre une couche déposée sur la surface interne des canaux continue et homogène dont l'épaisseur est d'environ 4 µm, cette couche est infiltrée d'environ 2 µm dans la fibre.

La perméabilité à l'azote de cette membrane est de 4 Nm³/h.m².bar.

### Exemple 2

On utilise la solution de l'exemple 1. On remplit la porosité de la fibre avec de l'eau distillée, ainsi que les canaux. La fibre est alors placée dans un doigt de gant de diamètre 0,20 cm contenant la solution précurseur. L'ensemble est placé dans un autoclave, la synthèse hydrothermale est faite à 200°C pendant 55 heures. La fibre est ensuite rincée puis calcinée à 500°C pendant 4 heures.

La masse de zéolithe déposée est de 190 mg soit un rendement de 86 % par rapport à la masse de silice. L'observation par microscopie montre une couche externe continue et homogène dont l'épaisseur est d'environ 28 µm, et une partie infiltrée d'environ 1 µm dans la fibre.

La perméabilité à l'azote de cette membrane est de 0,7 Nm³/h.m².bar.

### Exemple 3

On prépare une solution aqueuse en mélangeant 120 g de silice du type Aerosil 380 de DEGUSSA avec 1000 ml d'une solution molaire de TPAOH. On laisse la solution vieillir une nuit. On utilise un tube céramique en alumine-α de 10 mm de diamètre extérieur et de 7 mm de diamètre intérieur, présentant une structure homogène dont le diamètre de pores est de 12 µm. La perméabilité initiale à l'azote du tube céramique est de 7400 Nm³/h.m².bar. Le tube est placé à l'intérieur d'un doigt de gant. La canal du tube est rempli par de l'eau distillée, et l'extérieur du tube parla solution de silice et de TPAOH. L'ensemble est placé dans un autoclave, la synthèse hydrothermale est faite à 190°C pendant 72 heures. Le tube est ensuite rincé puis calciné à 500°C pendant 2 heures.

La perméabilité à l'azote du tube ainsi traité est de 2500 Nm³/h.m².bar, celle à l'hexafluorure de soufre de 900 soit une sélectivité de 2.8. Ceci montre qu'il est possible d'avoir une croissance cristalline même pour des supports dont la dimension de pore est très élevée.

Après répétition du procédé, le tube est étanche à l'hexafluorure de soufre.

Les fibres de l'invention, montées en modules, offrent ainsi une compacité très élevée.

## Revendications

1. Membrane comprenant un support poreux homogène ayant un diamètre de pore compris entre 5 nm et 20 µm, sur lequel est déposée une couche d'un tamis moléculaire unitaire zéro-défaut ne présentant pas de rupture de sa structure tri-dimensionnelle macroscopique,
susceptible d'être obtenue par le procédé comprenant les étapes suivantes:
(i) préparation d'une solution inerte et d'une solution précurseur du tamis moléculaire;
(ii) imprégnation de la porosité du support avec la solution inerte et/ou la solution précurseur;
(iii), mise en contact d'une zone du support céramique qui est destinée à recevoir la couche d'un tamis moléculaire avec la solution précurseur, et la mise en contact d'une zone du support qui est destinée à ne pas recevoir la couche d'un tamis moléculaire avec la solution inerte; et
(iv) formation in situ du tamis moléculaire.

2. Membrane selon le revendication 1, dans laquelle la couche unitaire est une couche unique.

3. Membrane selon la revendication 1 ou 2 dans laquelle l'épaisseur de la couche d'un tamis moléculaire est comprise entre 1 et 100 µm.

4. Membrane selon la revendication 3, dans laquelle l'épaisseur de la couche d'un tamis moléculaire est comprise entre 3 et 50 µm.

5. Membrane selon l'une des revendications 1 à 4, dans laquelle le tamis moléculaire est une zéolithe.

6. Membrane selon l'une des revendications 1 à 5, dans laquelle le support présente un diamètre de pore compris entre 5 nm et 10 µm.

7. Membrane selon l'une des revendications 1 à 6, dans laquelle le support présente un diamètre de pore compris entre 50 nm et 2 µm.

8. Membrane selon l'une des revendications 1 à 7, dans laquelle le support est un support céramique.

9. Membrane selon l'une des revendications 1 à 8, dans laquelle le support est une fibre.

10. Membrane selon la revendication 9, dans laquelle la fibre est une fibre multi-canal.

11. Membrane selon la revendication 9 ou 10, dans laquelle la couche de tamis moléculaire est disposée sur l'extérieur de la fibre.

12. Membrane selon la revendication 9 ou 10, dans laquelle la couche de tamis moléculaire est disposée à l'intérieur du (des) canal(aux) de la fibre.

13. Membrane selon la revendication 9 ou 10 dans laquelle la couche de tamis moléculaire est disposée sur l'extérieur de la fibre, le tamis moléculaire étant par ailleurs présent dans l'épaisseur de la fibre.

14. Membrane selon la revendication 9 ou 10, dans laquelle la couche de tamis moléculaire est disposée à l'intérieur du(des) canal(aux) de la fibre, le tamis moléculaire étant par ailleurs présent dans l'épaisseur de la fibre.

15. Module comprenant des membranes selon l'une des revendications 1 à 14.

16. Utilisation du module selon la revendication 15 pour la séparation de gaz.

17. Procédé de séparation de gaz comprenant l'étape de perméation sur une membrane selon l'une des revendications 1 à 14.

18. Procédé de préparation de membrane comprenant un support poreux homogène ayant un diamètre de pore compris entre 5 nm et 20 µm, sur lequel est déposée une couche d'un tamis moléculaire, comprenant les étapes suivantes:
(i) préparation d'une solution inerte et d'une solution précurseur du tamis moléculaire;
(ii) imprégnation de la porosité du support avec la solution inerte et/ou la solution précurseur;
(iii) mise en contact d'une zone du support céramique qui est destinée à recevoir la couche d'un tamis moléculaire avec la solution précurseur, et la mise en contact d'une zone du support qui est destinée à ne pas recevoir la couche d'un tamis moléculaire avec la solution inerte; et
(iv) formation in situ du tamis moléculaire.

19. Procédé selon la revendication 18, dans lequel le support est un support comprenant au moins un canal.

20. Procédé selon la revendication 19, dans lequel les étapes (ii) et (iii) comprennent:
d'une part le remplissage du volume du (des) canal(aux) et des pores du support avec la solution inerte et d'autre part le remplissage d'un volume englobant l'extérieur du support avec la solution précurseur.

21. Procédé selon la revendication 19, dans lequel les étapes (ii) et (iii) comprennent:
d'une part le remplissage d'un volume englobant l'extérieur du support et des pores du support avec la solution inerte et d'autre part le remplissage du volume du(des) canal(aux) avec la solution précurseur.

22. Procédé selon la revendication 19, dans lequel les étapes (ii) et (iii) comprennent:
d'une part le remplissage du volume du(des) canal(aux) avec la solution inerte et d'autre part le remplissage d'un volume englobant l'extérieur du support et les pores du support avec la solution précurseur.

23. Procédé selon la revendication 19, dans lequel les étapes (ii) et (iii) comprennent:
d'une part le remplissage d'un volume englobant l'extérieur du support avec la solution inerte et d'autre part le remplissage du volume du(des) canal(aux) et des pores du support avec la solution précurseur.

24. Procédé selon l'une quelconque des revendications 18 à 23, dans lequel la solution précurseur est une solution aqueuse comprenant un agent précurseur du tamis moléculaire et un agent structurant.

25. Procédé selon l'une quelconque des revendications 18 à 24, dans lequel la solution précurseur est vieillie préalablement à son utilisation d'une durée comprise entre 1 et 96 heures.

26. Procédé selon l'une quelconque des revendications 18 à 25, dans lequel la solution précurseur est vieillie préalablement à son utilisation d'une durée comprise entre 12 et 72 heures.

27. Procédé selon l'une quelconque des revendications 18 à 26, dans lequel la solution inerte est une solution aqueuse.

28. Procédé selon l'une quelconque des revendications 18 à 27, dans lequel l'étape (iv) de formation du tamis moléculaire comprend une synthèse hydrothermale suivie d'une calcination.

29. Procédé selon l'une quelconque des revendications 18 à 28, dans lequel la membrane est selon l'une quelconque des revendications 1 à 14.

## Claims

1. A membrane comprising a homogeneous porous carrier having a pore diameter comprised between 5 nm and 20 µm, on which a zero-defect unitary layer of a molecular sieve having no break in its three-dimensional macroscopic structure is deposited,
obtainable by the method comprising the following steps:
(i) preparing an inert solution and a precursor solution of the molecular sieve;
(ii) impregnating the porosity of the carrier with the inert solution;
(iii)bringing a region of the ceramic carrier intended to receive the layer of a molecular sieve into contact with the precursor solution, and bringing a region of the carrier not intended to receive the layer of a molecular sieve into contact with the inert solution; and
(iv) forming a molecular sieve in situ.

2. The membrane according to claim 1, in which the unitary layer is a single layer.

3. The membrane according to claim 1 or 2 in which the thickness of the layer of a molecular sieve is comprised between 1 and 100 µm.

4. The membrane according to claim 3, in which the thickness of the layer of a molecular sieve is comprised between 3 and 50 µm.

5. The membrane according to one of claims 1 to 4, in which the molecular sieve is a zeolite.

6. The membrane according to one of claims 1 to 5, in which the carrier has a pore diameter comprised between 5 nm and 10 µm.

7. The membrane according to one of claims 1 to 6, in which the carrier has a pore diameter comprised between 50 nm and 2 µm.

8. The membrane according to one of claims 1 to 7, in which the carrier is a ceramic carrier.

9. The membrane according to one of claims 1 to 8, in which the carrier is a fiber.

10. The membrane according to claim 9, in which the fiber is a multi-channel fiber.

11. The membrane according to claim 9 or 10, in which the layer of molecular sieve is arranged on the outside of the fiber.

12. The membrane according to claim 9 or 10, in which the layer of molecular sieve is arranged inside a channel or channels of the fiber.

13. The membrane according to claim 9 or 10, in which the layer of molecular sieve is arranged on the outside of the fiber, the molecular sieve being additionally present within the thickness of the fiber.

14. The membrane according to claim 9 or 10, in which the layer of molecular sieve is arranged inside the channel or channels of the fiber, the molecular sieve being additionally present in the thickness of the fiber.

15. A module comprising membranes according to one of claims 1 to 14.

16. The use of the module according to claim 15 for gas separation.

17. A method for separating gas comprising the step of permeation on a membrane according to one of claims 1 to 14.

18. A method for preparing a membrane comprising a homogeneous porous carrier having a pore diameter comprised between 5 nm and 20 µm, on which a layer of a molecular sieve membrane is deposited, comprising the following steps:
(i) preparing an inert solution and a precursor solution of the molecular sieve;
(ii) impregnating the porosity of the carrier with the inert solution;
(iii)bringing a region of the ceramic carrier intended to receive the layer of a molecular sieve into contact with the precursor solution, and bringing a region of the carrier not intended to receive the layer of a molecular sieve into contact with the inert solution; and
(iv) forming a molecular sieve in situ.

19. The method according to claim 18, in which the carrier is a carrier comprising at least one channel.

20. The method according to claim 19, in which steps (ii) and (iii) comprise:
firstly, filling the volume of the channel or channels and pores of the carrier with the inert solution and, secondly, filling a volume surrounding the outside of the carrier with the precursor solution.

21. The method according to claim 19, in which steps (ii) and (iii) comprise:
firstly, filling a volume surrounding the outside of the carrier and the pores of the carrier with the inert solution and, secondly, filling the volume of said channel or channels with the precursor solution.

22. The method according to claim 19, in which steps (ii) and (iii) comprise:
firstly, filling the volume of the channel or channels with the inert solution and, secondly, filling a volume surrounding the outside of the carrier and the pores of the carrier with the precursor solution.

23. The method according to claim 19, in which steps (ii) and (iii) comprise:
firstly, filling a volume surrounding the outside of the carrier with the inert solution and, secondly, filling the volume of said channel or channels and of the pores of the carrier with the precursor solution.

24. The method according to one of claims 18 to 23, in which the precursor solution is an aqueous solution comprising a precursor agent for the molecular sieve and a structuring agent.

25. The method according to any one of claims 18 to 24, in which the precursor solution is aged prior to its use for a duration comprised between 1 and 96 hours.

26. The method according to any one of claims 18 to 25, in which the precursor solution is aged prior to its use for a duration comprised between 12 and 72 hours.

27. The method according to any one of claims 18 to 26, in which the inert solution is an aqueous solution.

28. The method according to any one of claims 18 to 27, in which step (iv) in the formation of the molecular sieve comprises a hydrothermal synthesis followed by calcinating.

29. The method according to any one of claims 18-28, in which the membrane is according to any one of claims 1 to 14.

## Patentansprüche

1. Membran, umfassend einen homogenen porösen Stützkörper mit einem Porendurchmesser, enthalten zwischen 5 nm und 20 µm, an welchem eine einstückige Null-Fehlstellen-Molekularsiebschicht gefällt oder niedergeschlagen ist, die keine Unterbrechung in ihrer dreidimensionalen makroskopischen Struktur aufweist, erhaltbar durch ein Verfahren, umfassend die folgenden Schritte:
i) Vorbereitung einer inerten Lösung und einer Vorläuferlösung des Molekularsiebes;
ii) Imprägnieren der Porösität der Stütze oder des Stützkörpers mit der inerten Lösung und/oder der Vorläuferlösung;
iii) In Berührung bringen einer Zone der keramischen Stütze, beziehungsweise des keramischen Stützkörpers, die bestimmt ist, die Schicht eines Molekularsiebes zu empfangen mit der Vorläuferlösung, und in Berührung bringen einer Zone der Stütze, beziehungsweise des Stützkörpers, die bestimmt ist nicht die Schicht eines Molekularsiebes zu empfangen mit der inerten Lösung;
iv) in situ Bildung des Molekularsiebes.

2. Membran nach Anspruch 1, bei welcher die einstückige Schicht eine einzelne Schicht ist.

3. Membran nach Anspruch 1 oder 2, bei welcher die Dicke der Schicht eines Molekularsiebes ist zwischen 1 und 100 µm enthalten.

4. Membran nach Anspruch 3, bei welcher die Dicke der Schicht eines Molekularsiebes ist zwischen 3 und 50µm enthalten.

5. Membran nach einem der Ansprüche 1 bis 4, bei welcher das Molekularsieb ein Zeolith ist.

6. Membran nach einem der Ansprüche 1 bis 5, bei welcher die Stütze oder der Stützkörper einen Porendurchmesser aufweist, enthalten zwischen 5nm und 10µm.

7. Membran nach einem der Ansprüche 1 bis 6, bei welcher die Stütze oder der Stützkörper einen Porendurchmesser aufweist, enthalten zwischen 50nm und 2µm.

8. Membran nach einem der Ansprüche 1 bis 7, bei welcher die Stütze oder der Stützkörper eine keramische Stütze, beziehungsweise ein keramischer Stützkörper ist.

9. Membran nach einem der Ansprüche 1 bis 8, bei welcher die Stütze oder der Stützkörper eine Faser ist.

10. Membran nach Anspruch 9, bei welcher die Faser eine Mehrkanalfaser ist.

11. Membran nach Anspruch 9 oder 10, bei welcher die Molekularsiebschicht am Äußeren der Faser angeordnet ist.

12. Membran nach Anspruch 9 oder 10, bei welcher die Molekularsiebschicht im Inneren des Kanals der Faser, beziehungsweise im Inneren der Kanäle der Fasern, angeordnet ist.

13. Membran nach Anspruch 9 oder 10, bei welcher die Molekularsiebschicht am Äußeren oder äußerlich der Faser angeordnet ist, wobei das Molekularsieb des weiteren in der Dicke der Faser vorliegt.

14. Membran nach Anspruch 9 oder 10, bei welcher die Molekularsiebschicht im Inneren des Kanals oder der Kanäle der Faser angeordnet ist, wobei das Molekularsieb ferner vorliegt in beziehungsweise bei der Dicke der Faser.

15. Modul, umfassend Membranen nach einem der Ansprüche 1 bis 14.

16. Verwendung des Moduls nach Anspruch 15 zur Gastrennung.

17. Verfahren zur Gastrennung, umfassend den Schritt der Permeation bezüglich einer Membran nach einem der Ansprüche 1 bis 14.

18. Verfahren zur Membranherstellung, umfassend einen porösen homogenen Stützkörper, der über einen Porendurchmesser verfügt, enthalten zwischen 5nm und 20µm, an welchem eine Schicht eines Molekularsiebes gefällt oder niedergeschlagen ist, umfassend die Schritte:
i) Vorbereitung einer inerten Lösung und einer Vorläuferlösung des Molekularsiebes;
ii) Imprägnieren der Porosität des Stützkörpers bzw. der Stütze mit der inerten Lösung und/oder der Vorläuferlösung;
iii) In Berührung bringen von einer Zone des keramischen Stützkörpers, die bestimmt ist, die Schicht eines Molekularsiebes aufzunehmen mit der Vorläuferlösung, und in Berührung bringen einer Zone des Stützkörpers oder der Stütze, die bestimmt ist, nicht die Schicht eines Molekularsiebes zu empfangen oder aufzunehmen mit der inerten Lösung;
iv) Ausbildung des Molekularsiebes in situ

19. Verfahren nach Anspruch 18, bei welchem die Stütze oder der Stützkörper eine Stütze oder ein Stützkörper ist, umfassend zumindest einen Kanal.

20. Verfahren nach Anspruch 19, bei welchem die Schritte ii) und iii) umfassen:
Einerseits die Füllung des Volumens des oder der Kanals/Kanäle und der Poren der Stütze mit der inerten Lösung und andererseits die Füllung eines Volumens, welches äußerlich die Stütze oder den Stützkörper einschließt mit der Vorläuferlösung.

21. Verfahren nach Anspruch 19, bei welchem die Schritte ii) und iii) umfassen:
Einerseits die Füllung eines Volumens, welches das Äußere der Stütze oder Stützkörpers einschließt und der Poren der Stütze oder des Stützkörpers mit der inerten Lösung, und andererseits die Füllung des Volumens des oder der Kanals/Kanäle mit der Vorläuferlösung.

22. Verfahren nach Anspruch 19, bei welchem die Schritte ii) und iii) umfassen:
Einerseits die Füllung des Volumens des oder der Kanals/Kanäle mit der inerten Lösung und anderseits die Füllung eines Volumens, welches äußerlich die Stütze oder den Stützkörper einschließt oder umfaßt, und der Poren der Stütze oder des Stützkörpers mit der Vorläuferlösung.

23. Verfahren nach Anspruch 19, bei welchem die Schritte ii) und iii) umfassen:
Einerseits die Füllung oder Befüllung eines Volumens, welches das Äußere der Stütze einschließt oder umfaßt mit der inerten Lösung, und andererseits die Füllung oder Befüllung des Volumens des oder der Kanals/Kanäle und der Poren der Stütze oder Stützkörpers mit der Vorläuferlösung.

24. Verfahren nach einem der Ansprüche 18 bis 23, bei welchem die Vorläuferlösung eine wässrige Lösung ist, die einen Vorläuferagenten bzw. ein Vorläufermittel des Molekularsiebes und einen Strukturagenten bzw. ein Strukturmittel umfaßt.

25. Verfahren nach einem der Ansprüche 18 bis 24, bei welchem die Vorläuferlösung vorangehend zu dessen Verwendung gealtert ist, um eine Dauer, enthalten zwischen 1 und 96 Stunden.

26. Verfahren nach einem der Ansprüche 18 bis 25, bei welchem die Vorläuferlösung vorangehend zu dessen Verwendung gealtert ist um eine Dauer, enthalten zwischen 12 und 72 Stunden.

27. Verfahren nach einem der Ansprüche 18 bis 26, bei welchem die inerte Lösung eine wässrige Lösung ist.

28. Verfahren nach einem der Ansprüche 18 bis 27, bei welchem im Schritt iv) die Ausbildung des Molekularsiebes eine hydrothermale Synthese umfaßt, gefolgt von einer Kalzination.

29. Verfahren nach einem der Ansprüche 18 bis 28, bei welchem die Membran einem der Ansprüche 1 bis 14 genügt.
